# EUROPÄISCHE PATENTSCHRIFT

(11) **EP 1 245 456 B1**
(45) Veröffentlichungstag und Bekanntmachung des Hinweises auf die Patenterteilung: **19.05.2004**
(21) Anmeldenummer: 02005951.5
(22) Anmeldetag: 15.03.2002
(51) Int. Cl.: B60R 19/34, F16F 7/12

(54) **Aufpralldämpfer**
Impact absorber
Amortisseur de choc

(30) Priorität: 28.03.2001 DE 10115512
(43) Veröffentlichungstag der Anmeldung: 02.10.2002
(73) Patentinhaber: Wagon Automotive GmbH, 63857 Waldaschaff (DE)
(72) Erfinder: Beck, Manfred, 63500 Seligenstadt (DE)
(74) Vertreter: Gesthuysen, von Rohr & Eggert

(56) Entgegenhaltungen:
- WO-A-97/03865
- DE-A- 2 263 977
- DE-A- 2 636 696
- DE-A- 4 127 597
- DE-A- 19 807 158
- DE-A- 19 814 842
- FR-A- 2 238 869
- US-A- 3 564 688
- PATENT ABSTRACTS OF JAPAN vol. 009, no. 279 (M-427), 7. November 1985 (1985-11-07) -& JP 60 121147 A (NISSAN JIDOSHA KK), 28. Juni 1985 (1985-06-28)
- PATENT ABSTRACTS OF JAPAN vol. 007, no. 169 (M-231), 26. Juli 1983 (1983-07-26) -& JP 58 073475 A (MITSUBISHI JIDOSHA KOGYO KK), 2. Mai 1983 (1983-05-02)

## Beschreibung

Die Erfindung betrifft einen Aufpralldämpfer für Kraftfahrzeuge zur Energieaufnahme bei einer Kollision des Kraftfahrzeugs mit einem Hindernis mit den Merkmalen des Oberbegriffs von Anspruch 1.

Aufpralldämpfer der in Rede stehenden Art dienen dem Schutz der Insassen eines Kraftfahrzeugs bei einer Kollision, insbesondere bei einer Front-, Heckoder Seitenkollision dadurch, daß sie die bei einer solchen Kollision freiwerdende Energie durch Verformung so weit wie möglich aufnehmen und an die Fahrgastzelle nicht oder nur stark reduziert weitergeben. Solche Aufpralldämpfer werden primär eingesetzt zwischen den mit der Fahrgastzelle verbundenen Fahrzeuglängsträgern und den quer dazu verlaufenden stoßstangenseitigen Querträgem, den sogenannten Stoßfängerquerträgem. Die vorrangige Aufgabe des Stoßfängerquerträgers ist es dabei, bei einer Kollision einen Zugverbund zwischen der rechten und der linken Seite der Fahrzeugkarosserie sicherzustellen, um so einen optimalen Insassenschutz zu gewährleisten. Die Aufpralldämpfer zwischen den Fahrzeuglängsträgem und den Stoßfängerquerträgem müssen also eine zugfeste Verbindung zwischen den beteiligten Trägern ebenso realisieren wie die gewünschte Energieaufnahme durch Verformung. Dadurch werden an solche Aufpralldämpfer ganz erhebliche Anforderungen an Material und Auslegung gestellt. Derartige Aufpralldämpfer bestehen regelmäßig aus Metall, insbesondere aus Stahl, gegebenenfalls auch aus Aluminium, Magnesium oder entsprechenden Legierungen. Ganz unterschiedliche Stahlsorten, auch hochfeste Stähle in entsprechender Formgebung werden hier gern verwendet.

Aufpralldämpfer für Kraftfahrzeuge zur Energieaufnahme sind auch für Seitenkollisionen einzusetzen, innerhalb der Strukturen, die gemeinhin als Seitenaufprallschutz bezeichnet werden. Auch der Bereich der B-Säule und ggf. der C-Säule könnte für die Anordnung des Aufpralldämpfers interessant sein. Schließlich sind Aufpralldämpfer der in Rede stehenden Art auch innerhalb der Fahrgastzelle einsetzbar, beispielsweise als Trägeranordnung für Kniepolster.

Im folgenden wird das Konzept der Erfindung anhand von in Fahrzeuglängsrichtung eingesetzten Aufpralldämpfern erläutert, die für Front- und Heckkollisionen relevant sind. Es ist zu berücksichtigen, daß Aufpralldämpfer für andere Anwendungen in entsprechender Weise angepaßt von der Lehre der Erfindung mit umfaßt werden. Aus diesem Grund wird auch immer von Stoßfängerquerträger o. dgl. und von Fahrzeuglängsträger o. dgl. die Rede sein, da entsprechende Tragstrukturen für andere Anordnungen an der Fahrzeugkarosserie mit umfaßt sein sollen.

Für Funktion und Wirkung eines Aufpralldämpfers ist der Kraft-Weg-Verlauf von entscheidender Bedeutung. Insbesondere dem Deformationsbeginn kommt dabei erhebliche Bedeutung zu. Insbesondere bei einer seitlich versetzten Frontkollision treten sehr komplexe Bewegungen des Stoßfängerquerträgers auf, die bei Konzeption des Aufpralldämpfers berücksichtigt werden sollten.

Zur Anpassung an den bogenförmigen Verlauf des Stoßfängerquerträgers, den Strak, ist bei dem bekannten Aufpralldämpfer, von dem die Erfindung ausgeht (DE 198 14 842 A1), vorgesehen, daß die Befestigungsfläche für den Stoßfängerquerträger und die Befestigungsfläche für den Fahrzeuglängsträger nicht parallel, sondern in einem spitzen Winkel zueinander ausgerichtet sind. Die entsprechend dem spitzen Winkel geneigte Stirnfläche des hier vorgesehenen zylindrischen Hohlkörpers bildet die Befestigungsfläche. Dazu hat der Hohlkörper einen dachförmig abgeschrägten Endabschnitt.

Unterhalb des so gebildeten Kopfbereiches des Aufpralldämpfers hat der Mantel des im übrigen zylindrischen Hohlkörpers mehrere hintereinander angeordnete, nach außen gewölbte und die Längsachse des Hohlkörpers ringförmig umschließende Ausbuchtungen. Dabei ist die Wölbung der Ausbuchtungen so gewählt, daß es bei einem Aufprall des Fahrzeuges zu einem definierten Zusammenfalten der Ausbuchtungen, ohne jedoch ein nennenswertes Stauchen der Seitenwände in diesem Bereich kommt. Hier wird also eine im wesentlichen gleichmäßige Faltungsfunktion beschrieben.

Die Winkelstellung zwischen Stoßfängerquerträger und Stirnfläche des Aufpralldämpfers verändert sich bei einer seitlich versetzten Frontkollision dadurch, daß der Stoßfängerquerträger zunächst in der Mitte stark eingedrückt wird und danach erst eine im wesentlichen gleichmäßige Verformung über die volle Breite des Auftreffbereichs in Längsrichtung erfolgt. Dabei kann es bei bekannten Aufpralldämpfern vorkommen, daß die quer zur Längsrichtung auftretende Kraftkomponente gerade bei Beginn der Frontkollision so groß ist, daß der Stoßfängerquerträger vom Aufpralldämpfer abreißt oder der Aufpralldämpfer seitlich wegknickt. Damit verliert der Aufpralldämpfer bereits bei Beginn der Frontkollision seine Wirkung, die an sich erst im Anschluß daran zum Schutze der Fahrgastzelle einsetzen soll.

Der Lehre liegt somit das Problem zugrunde, einen Aufpralldämpfer für Kraftfahrzeuge anzugeben, der hinsichtlich der Eigenschaften im Kollisonsfall, insbesondere bei einer seitlich versetzten Frontkollision, optimiert ist.

Das zuvor aufgezeigte Problem ist bei dem Aufpralldämpfer mit den Merkmalen des Oberbegriffs von Anspruch 1 durch die Merkmale des kennzeichnenden Teils von Anspruch 1 gelöst.

Erfindungsgemäß wird erreicht, daß der entsprechend dem Strak bogenförmig verlaufende Stoßfängerquerträger insbesondere bei einer seitlich versetzten Frontkollision an der zur Innenseite der Kraftfahrzeugkarosserie gerichteten Seite, die im Kollisionsfall als erste bzw. zu Beginn am stärksten mit Kraft beaufschlagt wird, gezielt in Längsrichtung verformt wird, ohne daß der Hauptteil des Aufpralldämpfers, nämlich der Hohlkörper als solcher, bereits verformt wird. Mit anderen Worten, aufgrund des erfindungsgemäß realisierten Vorlaufwegs ist gewährleistet, daß bei einer seitlich versetzten Frontkollision die zunächst in einem spitzen Winkel zur ersten Befestigungsfläche stehende zweite Befestigungsfläche sich bis zur Parallelität oder annähernder Parallelität mit der ersten Befestigungsfläche ausrichtet. Der Aufpralldämpfer insgesamt bleibt also zunächst bei Deformationsbeginn stehen und seine Verformung in Längsrichtung zum Zwecke der Energieaufnahme beginnt erst dann, wenn sich der Stoßfängerquerträger im besonders beanspruchten, zur Mitte der Kraftfahrzeugkarosserie liegenden Bereich erheblich nach innen verformt hat. Die Funktion des Aufpralldämpfers bleibt auch bei einer seitlich versetzten Frontkollision erhalten, die Fahrgastzelle bleibt optimal geschützt.

Bevorzugte Ausgestaltungen und Weiterbildungen des erfindungsgemäßen Aufpralldämpfers sind Gegenstand der Unteransprüche. Die Unteransprüche werden im übrigen auch im Zusammenhang mit der Erläuterung bevorzugter Ausführungsbeispiele anhand der Zeichnung weiter diskutiert.

Im folgenden wird die Erfindung anhand einer lediglich Ausführungsbeispiel darstellenden Zeichnung näher erläutert. In der Zeichnung zeigt
- Fig. 1: in einer Prinzipdarstellung einen Ausschnitt eines Stoßfängerquerträgers an einer Kraftfahrzeugkarosserie in Verbindung mit einem Aufpralldämpfer und einem Fahrzeuglängsträger,
- Fig. 2: ein erstes Ausführungsbeispiel eines erfindungsgemäßen Aufpralldämpfers,
- Fig. 3: ein zweites Ausführungsbeispiel eines erfindungsgemäßen Aufpralldämpfers.

Wie im allgemeinen Teil der Beschreibung bereits erläutert worden ist, ist der Aufpralldämpfer 1 für den Einsatz in Kraftfahrzeugen bestimmt, und zwar zur Energieaufnahme bei einer Kollision des Kraftfahrzeugs mit einem Hindernis. Der Aufpralldämpfer 1 kann an verschiedenen Stellen in der Karosserie des Kraftfahrzeugs eingebaut werden und soll die bei einer Kollision vorhandene Bewegungsenergie soweit wie möglich aufnehmen, um diese in Verformungsarbeit umzusetzen, so daß die Fahrgastzelle der Fahrzeugkarosserie möglichst wenig in Mitleidenschaft gezogen wird. Auf die Ausführungen dazu im allgemeinen Teil der Beschreibung darf hier nochmals hingewiesen werden.

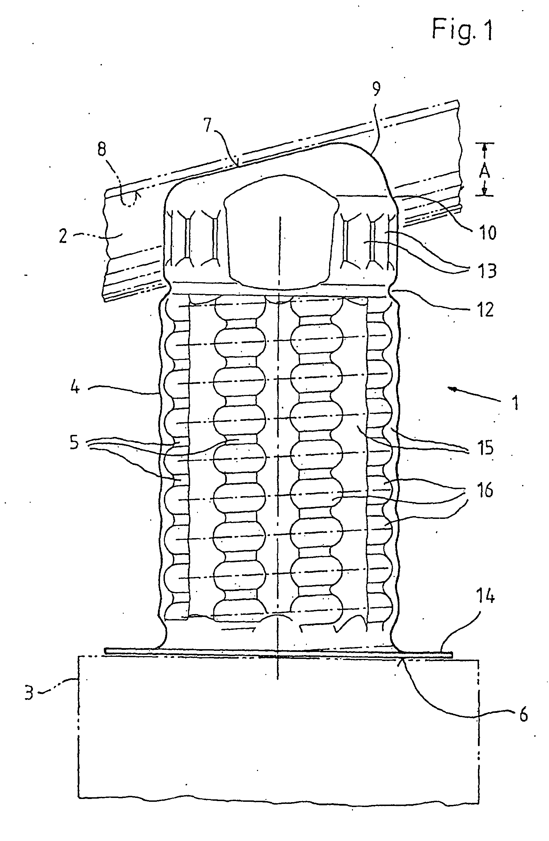

Das dargestellte Ausführungsbeispiel beschreibt, eben nur beispielhaft, einen Aufpralldämpfer 1 am Beispiel eines Einsatzes zur Energieaufnahme bei einer Frontkollision des Kraftfahrzeugs mit einem Hindernis, und zwar eingesetzt zwischen einem frontseitigen Stoßfängerquerträger 2 und einem in Fahrzeuglängsrichtung verlaufenden, mit der Fahrgastzelle verbundenen Fahrzeuglängsträger 3 bzw. dessen Stirnseite. In Fig. 1 ist dieser Fahrzeuglängsträger 3 lediglich gestrichelt angedeutet, um die Einbaulage des Aufpralldämpfers 1 besser verständlich zu machen. Außerdem ist die verdeckende Vorderseite des Stoßfängerquerträgers 2 weggelassen worden.

Der Aufpralldämpfer 1 besteht regelmäßig aus einem Metall, insbesondere aus Stahl, gegebenenfalls auch aus einer Aluminiumlegierung.

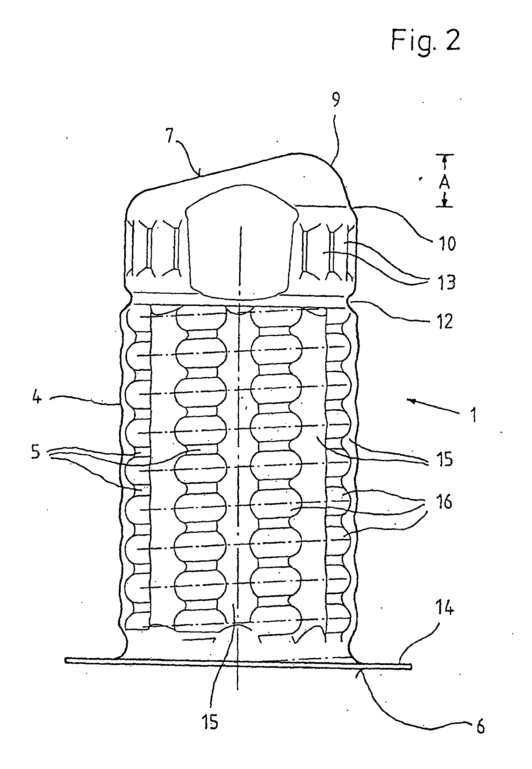

Fig. 1 zeigt den Aufpralldämpfer 1 zur Energieaufnahme bei einer Kollision des Kraftfahrzeugs mit einem Hindernis. Betrachtet man Fig. 2 im Zusammenhang mit Fig. 1, so erkennt man, daß der Aufpralldämpfer 1 einen aus Metall bestehenden, eine Längsrichtung des Aufpralldämpfer 1 definierenden zylinderischen Hohlkörper 4 aufweist. Bevorzugte Ausgestaltungen dieses zylinderischen Hohlkörpers 4 sind im übrigen Gegenstand älterer, nicht vorveröffentlichter Patentanmeldungen (DE 100 00 285.4, DE 100 00 286.2), auf die hier zur Vermeidung von Wiederholungen verwiesen werden darf. Der Hohlkörper 4 weist zur Realisierung einer definierten Stauchung des Hohlkörpers 4 bei Kraftbeaufschlagung in Längsrichtung im Mantel Verformungssicken 5 auf. Im einzelnen ist dazu auf die zuvor genannten, nicht vorveröffentlichten Patentanmeldungen zu verweisen.

Am Hohlkörper 4 ist eine im wesentlichen quer ausgerichtete, erste Befestigungsfläche 6 an einem Ende vorgesehen, zur Befestigung an einem Fahrzeuglängsträger 3 oder einem anderen Strukturbauelement der Kraftfahrzeugkarosserie. Am gegenüberliegenden, zweiten Ende des Hohlkörpers 4 befindet sich eine zweite Befestigungsfläche 7 zur Befestigung des Aufpralldämpfers 1 an einer Gegenfläche 8 des Stoßfängerquerträgers 2 oder eines anderen Strukturbauelementes der Kraftfahrzeugkarosserie. Der Hohlkörper 4 ist am zweiten Ende im wesentlichen geschlossen. Die dort befindliche zweite Befestigungsfläche 7 erlaubt eine Befestigung des Stoßfängerquerträgers 2 am Hohlkörper 4 mit in einem spitzen Winkel zur ersten Befestigungsfläche 6 verlaufender Gegenfläche 8. Fig. 1 läßt den Strak des Stoßfängerquerträgers 2, also den in komplexer Weise bogenförmigen Verlauf über die Breite der Kraftfahrzeugkarosserie erkennen, der dazu führt, daß sich die Gegenfläche 8 in einem spitzen Winkel zur ersten Befestigungsfläche 6 befindet. Dem trägt die Ausrichtung der zweiten Befestigungsfläche 7 des Hohlkörpers 4 Rechnung. Im einzelnen darf dazu auf den allgemeinen Teil der Beschreibung verwiesen werden, wo der Hintergrund dieser im spitzen Winkel liegenden Anordnung verschiedener Flächen erläutert wird.

Das in Fig. 1, 2 und 3 dargestellte Ausführungsbeispiel eines erfindungsgemäßen Aufpralldämpfers 1 zeichnet sich nun dadurch aus, daß die zweite Befestigungsfläche 7 als entsprechend dem spitzen Winkel geneigte Stirnfläche des Hohlkörpers 4 ausgebildet ist, der Hohlkörper 4 einen die zweite Befestigungsfläche 7 ausbildenden, dachförmig abgeschrägten Endabschnitt 9 aufweist und etwa unterhalb des in Längsrichtung am weitesten vom liegenden Randes der zweiten Befestigungsfläche 7, in Fig. 1 der oben rechts liegende Rand, in Längsrichtung um einen bestimmten Abstand A dagegen zurückversetzt, im Mantel des Hohlkörpers eine Knickstelle 10 ausgebildet ist. Diese Knickstelle 10 ist derart ausgebildet, daß bei anfänglicher Kraftbeaufschlagung an dieser Stelle zunächst hier eine Stauchung stattfindet, und zwar im wesentlichen ohne Stauchung des Hohlkörpers 4 im übrigen.

Aufgrund des Einbaus des Aufpralldämpfers 1 relativ zum Stoßfängerquerträger 2 mit Verlauf der zweiten Befestigungsfläche 7 entsprechend der schräg verlaufenden Gegenfläche 8 am Stoßfängerquerträger 2 erfolgt an diesem am weitesten vom liegenden Rand der zweiten Befestigungsfläche 7 im Kollisionsfall gleich zu Beginn die stärkste Kraftbeaufschlagung. Jedenfalls gilt das dann, wenn es sich um eine seitlich versetzte Frontkollision handelt, ähnlich passiert das aber auch bei einer mittigen Frontkollision. Mit anderen Worten, der bogenförmig dem Strak entsprechend nach außen gewölbte Stoßfängerquerträger 2 kann sich zunächst im Bereich des am weitesten vom liegenden Randes der zweiten Befestigungsfläche 7 um einen Vorlaufweg in Längsrichtung des Hohlkörpers 4 verlagern, wobei zunächst nur der Endabschnitt 9 des Hohlkörpers 4 zusammengedrückt wird. Der Hohlkörper 4 im übrigen bleibt im wesentlichen unverändert. Die Stauchung des Hohlkörpers 4 in Längsrichtung beginnt vielmehr erst dann, wenn der Stoßfängerquerträger 2 sich zur Mitte der Karosserie hin bereits in Längsrichtung erheblich verlagert hat, so daß die auf den Aufpralldämpfer 1 in Querrichtung wirkenden Kräfte zum Teil bereits abgebaut worden sind. Dann wird der Hohlkörper 4 anschließend daran in Längsrichtung gestaucht und erfüllt damit seine Schutzfunktion für die Fahrgastzelle.

In Fig. 2 erkennt man die Knickstelle 10 rechts am Endabschnitt 9 im Abstand A vom vom liegenden Rand der zweiten Befestigungsfläche 7. Bei Kraftbeaufschlagung in Längsrichtung in Richtung der ersten Befestigungsfläche 6 knickt das Material hier nach innen ein und die dachförmige Schräge des Endabschnittes 9 verschwindet. Der Hohlkörper 4 im übrigen bleibt weitgehend stehen. Danach erfolgt eine Stauchung des Hohlkörpers 4 in Längsrichtung.

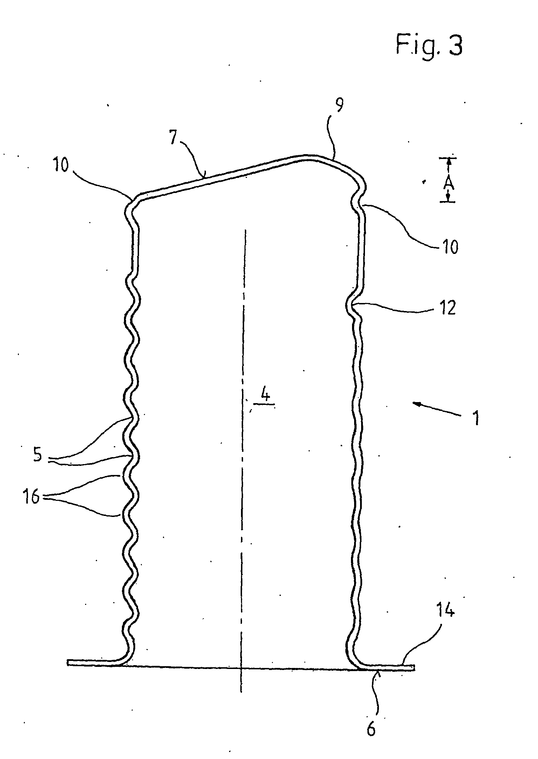

Fig. 3 zeigt eine etwas ausgeprägtere Ausbildung der Knickstelle 10 bei einem weiteren Ausführungsbeispiel.

In beiden Fällen entspricht der bestimmte Abstand A etwa dem Abstand des am weitesten vom liegenden Randes von dem am weitesten hinten liegenden Rand der zweiten Befestigungsfläche 7.

Beim Ausführungsbeispiel aus Fig. 2 ist die Knickstelle 10 als am Mantel des Hohlkörpers 4 im Endabschnitt 9 über einen Teilabschnitt verlaufende Sicke ausgeführt. Im in Fig. 3 dargestellten Ausführungsbeispiel erkennt man eine solche Sicke allerdings in abgewandelter Form auch an dem gegenüberliegenden Rand.

Bei allen Ausführungsbeispielen ist im vorliegenden Fall im übrigen vorgesehen, daß der Endabschnitt 9 des Hohlkörpers 4 vom Hohlkörper 4 im übrigen durch eine vollständig umlaufende Sicke 12 abgesetzt ist. Außerdem ist vorgesehen, daß der Mantel des Hohlkörpers 4 im Endabschnitt 9, und zwar zwischen der Knickstelle 10 und der Sicke 12, mit in Längsrichtung verlaufenden Versteifungsrippen 13 versehen ist. Das hat zur Folge, daß der Endabschnitt 9 des Hohlkörpers 4 insgesamt einen in Längsrichtung relativ steifen, also nur unter hohen Kräften stauchbaren Bereich bildet, in den hinein das dachförmig abgeschrägte Ende gedrückt wird, bevor dann insgesamt der Hohlkörper 4 im übrigen in Längsrichtung, also axial gestaucht wird.

Die dargestellten und bevorzugten Ausführungsbeispiele zeigen im übrigen, daß, wie im Stand der Technik bereits bekannt, der Hohlkörper 4 zur Ausbildung der ersten Befestigungsfläche 6 einen nach außen abgragenden Befestigungsflansch 14 aufweist.

Bereits weiter oben ist darauf hingewiesen worden, daß die Ausgestaltung 4 mit den besonderen Verformungssicken 5 Gegenstand von älteren, nicht vorveröffentlichten Patentanmeldungen ist. Im einzelnen kann man insoweit vorsehen, daß, wie hier dargestellt, der Hohlkörper 4 mindestens drei gleichmäßig über seinen Umfang verteilt angeordnete und sich in Längsrichtung erstreckende stegförmige Bereiche 15 aufweist und zwischen benachbarten stegförmigen Bereichen 15 im Mantel des Hohlkörpers 4 mindestens drei parallele, in Umfangsrichtung verlaufende und zum Innenraum des Hohlkörpers gerichtete Versteifungssicken 5 angeordnet sind derart, daß sich - in axialer Richtung gesehen - zwischen benachbarten Versteifungssicken 5 nach außen gewölbte Bereiche 16 ergeben. Die umfangseitig benachbarten gewölbten Bereiche 16 umschließen im dargestellten Ausführungsbeispiel die Längsachse des Hohlkörpers 4 schraubenlinienförmig. Eine Alternative kann auch bei kreisförmiger Gestaltung liegen.

Eine nicht dargestellte Alternative besteht beispielsweise darin, daß der Hohlkörper 4 im Mantel eine nach außen gewölbte Verformungssicke 5 mit schraubenlinienförmigem Verlauf mit mindestens zwei den Hohlkörper 4 umschließenden Windungen aufweist.

Im übrigen bedeutet der Begriff zylindrischer Hohlkörper 4 nicht zwingend eine kreiszylindrische Gestaltung, auch andere Querschnitte, ovale, viereckige, mehreckige Querschnitte sind ebenso denkbar, wenn sich das in der Praxis in Versuchen als zweckmäßig erweist.

Im einzelnen darf insoweit auch auf die bereits genannten älteren Patentanmeldungen verwiesen werden.

## Patentansprüche

1. Aufpralldämpfer für Kraftfahrzeuge zur Energieaufnahme bei einer Kollision des Kraftfahrzeugs mit einem Hindernis,
mit einem aus Metall bestehenden, eine Längsrichtung des Aufpralldämpfers (1) definierenden zylindrischen Hohlkörper (4) mit Verformungssicken (5) im Mantel zur Realisierung einer definierten Stauchung des Hohlkörpers (4) bei Kraftbeaufschlagung in Längsrichtung,
mit einer im wesentlichen quer ausgerichteten, ersten Befestigungsfläche (6) an einem Ende des Hohlkörpers (4) zur Befestigung an einem Fahrzeuglängsträger (3) oder einem anderen Strukturbauelement der Kraftfahrzeugkarosserie,
mit einer zweiten Befestigungsfläche (7) am gegenüberliegenden, zweiten Ende des Hohlkörpers (4) zur Befestigung an einer Gegenfläche (8) eines Stoßfängerquerträgers (2) oder eines anderen Strukturbauelementes der Kraftfahrzeugkarosserie,
wobei der Hohlkörper (4) am zweiten Ende im wesentlichen geschlossen ist und die zweite Befestigungsfläche (7) eine Befestigung des Stoßfängerquerträgers (2) mit in einem spitzen Winkel zur ersten Befestigungsfläche (6) verlaufender Gegenfläche (8) erlaubt,
wobei die zweite Befestigungsfläche (7) an einer entsprechend dem spitzen Winkel geneigten Stirnfläche des Hohlkörpers (4) ausgebildet ist und
wobei der Hohlkörper (4) einen die zweite Befestigungsfläche (7) ausbildenden, dachförmig abgeschrägten Endabschnitt (9) aufweist
**dadurch gekennzeichnet,**
**daß** etwa unterhalb des in Längsrichtung am weitesten vom liegenden Randes der zweiten Befestigungsfläche (7), in Längsrichtung um einen bestimmten Abstand (A) dagegen zurückversetzt, im Mantel des Hohlkörpers (4) eine Knickstelle (10) ausgebildet ist, am gegenüberliegenden Rand jedoch keine oder eine in abgewandelter Form ausgeprägte Knickstelle (10) ausgebildet ist, dergestalt, daß bei anfänglicher Kraftbeaufschlagung an dieser Stelle zunächst an der dem vorne liegenden Rand zugeordneten Knickstelle (10) eine Stauchung des Hohlkörpers (4) erfolgt.

2. Aufpralldämpfer nach Anspruch 1, **dadurch gekennzeichnet, daß** der bestimmte Abstand (A) etwa dem Abstand des am weitesten vom liegenden Randes von dem am weitesten hinten liegenden Rand der zweiten Befestigungsfläche (7) entspricht.

3. Aufpralldämpfer nach Anspruch 1 oder 2 **dadurch gekennzeichnet, daß** die Knickstelle (10) am Mantel als über einen Abschnitt des Umfangs verlaufende Sicke ausgeführt ist.

4. Aufpralldämpfer nach einem der Ansprüche 1 bis 3, **dadurch gekennzeichnet, daß** der Mantel des Hohlkörpers (4) im Endabschnitt (9) hinter der Knickstelle (10) mit in Längsrichtung verlaufenden Versteifungsrippen (13) versehen ist.

5. Aufpralldämpfer nach einem der Ansprüche 1 bis 4, **dadurch gekennzeichnet, daß** der Hohlkörper (4) zur Ausbildung der ersten Befestigungsfläche (6) einen nach außen abragenden Befestigungsflansch (14) aufweist.

6. Aufpralldämpfer nach einem der Ansprüche 1 bis 5, **dadurch gekennzeichnet, daß** der Hohlkörper (4) im Mantel mindestens drei gleichmäßig über seinen Umfang verteilt angeordnete und sich in Längsrichtung des Hohlkörpers (4) erstreckende stegförmige Bereiche (15) aufweist, daß zwischen benachbarten stegförmigen Bereichen (15) im Mantel des Hohlkörpers (4) jeweils mindestens drei parallele, in Umfangsrichtung verlaufende und zum Innenraum des Hohlkörpers (4) gerichtete Verformungssicken (5) angeordnet sind derart, daß sich - in axialer Richtung gesehen ― zwischen benachbarten Verformungssicken (5) nach außen gewölbte Bereiche (16) ergeben, wobei die umfangseitig benachbarten gewölbten Bereiche (16) die Längsachse des Hohlkörpers (4) schraubenlinienförmig oder kreisringförmig umschließen.

7. Aufpralldämpfer nach einem der Ansprüche 1 bis 5, **dadurch gekennzeichnet, daß** der Hohlkörper (4) im Mantel eine nach außen gewölbte Verformungssicke (5) mit schraubenlinienförmigem Verlauf mit mindestens zwei den Hohlkörper (4) umschließenden Windungen aufweist.

## Claims

1. An impact absorbing device for motor vehicles, for absorbing energy on a collision of the motor vehicle with an obstacle,
comprising a cylindrical hollow body (4) which consists of metal, which defines a longitudinal direction of the impact absorbing device (1), and which comprises deformation beads (5) in its curved surface for effecting a defined crumpling of the hollow body (4) when acted upon by a force in the longitudinal direction,
comprising a first fixing face (6), which is aligned substantially transversely, at one end of the hollow body (4) for fixation to a vehicle longitudinal beam (3) or to another structural component of the motor vehicle body,
comprising a second fixing face (7) at the opposite, second end of the hollow body (4) for fixation to a counter-face (8) of a transverse bumper beam (2) or to another structural component of the motor vehicle body,
wherein the hollow body (4) is substantially closed at its second end and the second fixing face (7) enables the transverse bumper beam (2) to be fixed to a counter-face (8) which extends at an acute angle to the first fixing face (6),
wherein the second fixing face (7) is formed on an end face of the hollow body (4) which is inclined corresponding to the acute angle, and
wherein the hollow body (4) comprises an end section (9) which slopes in the shape of a roof and which forms the second fixing face (7),
**characterised in that**
a buckling location (10) is formed in the curved surface of the hollow body (4), approximately underneath the edge, which is situated furthest in front in the longitudinal direction, of the second fixing face (7), which buckling location is set back by a defined distance (A) in the longitudinal direction, but that no buckling location (10), or a buckling location shaped in modified form, is formed at the opposite edge, so that when a force initially acts at this location crumpling of the hollow body (4) firstly occurs at the buckling location (10) which is associated with the edge situated at the front.

2. An impact absorbing device according to claim 1, **characterised in that** the defined distance (A) approximately corresponds to the distance of the edge situated furthest in front from the rearmost edge of the second fixing face (7).

3. An impact absorbing device according to claim 1 or 2, **characterised in that** the buckling location (10) on the curved surface is formed as a bead which extends over a section of the periphery.

4. An impact absorbing device according to any one of claims 1 to 3, **characterised in that** the curved surface of the hollow body (4) is provided with longitudinally extending stiffening ribs (13) in the end section (9) behind the buckling location (10).

5. An impact absorbing device according to any one of claims 1 to 4, **characterised in that** in order to form the first fixing face (6) the hollow body (4) has an outwardly protruding fixing flange (14).

6. An impact absorbing device according to any one of claims 1 to 5, **characterised in that** in its curved surface the hollow body (4) comprises at least three rib-like regions (15) which are distributed uniformly over its periphery and which extend in the longitudinal direction of the hollow body (4), that at least three parallel deformation beads (5), which extend peripherally and which are oriented towards the interior space of the hollow body (4), are each disposed between adjacent rib-like regions in the curved surface of the hollow body (4) so that - as seen in an axial direction - outwardly curved regions (16) are formed between adjacent deformation beads (5), wherein the peripherally adjacent, curved regions (16) surround the longitudinal axis of the hollow body (4) helically or annularly.

7. An impact absorbing device according to any one of claims 1 to 5, **characterised in that** in its curved surface the hollow body (4) comprises an outwardly curved deformation bead (5) with a helical progression, which comprises at least two turns which surround the hollow body (4).

## Revendications

1. Amortisseur de choc pour véhicule automobile destiné à absorber l'énergie lors d'une collision entre le véhicule et un obstacle, comprenant
un corps creux (4) cylindrique en métal, qui définit une direction longitudinale de l'amortisseur de choc (1) et porte des moulures de déformation (5) dans son enveloppe aux fins de permettre une compression définie du corps creux (4) lorsque celui-ci est sollicité par une force dans la direction longitudinale,
une première surface de fixation (6) orientée essentiellement transversalement prévue à une extrémité du corps creux (4), pour la fixation à un longeron (3) du véhicule ou à un autre élément structurel de la carrosserie de véhicule
une deuxième surface de fixation (7) prévue à la deuxième extrémité opposée du corps creux (4), pour la fixation à une surface associée (8) d'une traverse de pare-choc(2) ou d'un autre élément structurel de la carrosserie de véhicule,
le corps creux (4), à sa deuxième extrémité, étant essentiellement fermé et la deuxième surface de fixation (7) permettant une fixation de la traverse de pare-choc (2) à la surface associée (8) qui forme un angle aigu avec la première surface de fixation (6),
la deuxième surface de fixation (7) étant aménagée sur une face frontale du corps creux (4) présentant une inclinaison adaptée à l'angle aigu et
le corps creux (4) présentant un tronçon d'extrémité (9) incliné en forme de toit, qui constitue la deuxième surface de fixation (7),
**caractérisé par le fait qu'**approximativement au dessous du bord de la deuxième surface de fixation (7) le plus avancé dans la direction longitudinale, en retrait d'une distance définie (A) dans la direction longitudinale, un point de flexion (10) est aménagé dans l'enveloppe du corps creux (4), tandis que le bord opposé ne comporte pas de point de flexion (10) ou comporte une forme de point de flexion modifiée, de sorte qu'au début de l'application d'une force en ce point, une déformation en compression du corps creux (4) se produit en premier au niveau du point de flexion (10) associé au bord avancé.

2. Amortisseur de choc selon la revendication 1, **caractérisé par le fait que** la distance définie (A) correspond approximativement à la distance séparant le bord le plus avancé du bord le plus reculé de la deuxième surface de fixation (7).

3. Amortisseur de choc selon la revendication 1 ou 2, **caractérisé par le fait que** le point de flexion (10) dans l'enveloppe est réalisé sous la forme d'une moulure qui s'étend sur une portion de la circonférence.

4. Amortisseur de choc selon une des revendications 1 à 3, **caractérisé par le fait que** l'enveloppe du corps creux (4), dans sa portion d'extrémité (9) située derrière le point de flexion (10), est pourvue de nervures de rigidification (13) qui s'étendent dans la direction longitudinale.

5. Amortisseur de choc selon une des revendications 1 à 4, **caractérisé par le fait que** le corps creux (4), pour former la première surface de fixation (6) présente une bride de fixation (14) qui s'étend en direction de l'extérieur.

6. Amortisseur de choc selon une des revendications 1 à 5, **caractérisé par le fait que** le corps creux (4), comporte dans son enveloppe au moins trois zones (15) en forme de barrettes, qui sont réparties régulièrement sur la circonférence et s'étendent dans la direction longitudinale du corps creux (4), qu'entre des zones (15) en forme de barrettes voisines, dans l'enveloppe du corps creux (4), au moins trois moulures de déformation (5), qui s'étendent dans la direction périphérique et sont orientées en direction de l'intérieur du corps creux (4), sont disposées de telle sorte que ― vu dans la direction axiale - des zones (16) bombées en direction de l'extérieur soient formées entre des moulures de déformation (5) voisines, les zones (16) bombées voisines dans la direction périphérique entourant l'axe longitudinal du corps creux (4) en formant une hélice ou des anneaux de cercle.

7. Amortisseur de choc selon une des revendications 1 à 5, **caractérisé par le fait que** le corps creux (4), présente dans l'enveloppe, une moulure de déformation (5) cintrée en direction de l'extérieur avec un tracé en hélice à au moins deux spires, qui entoure le corps creux (4).
